(19) Europäisches Patentamt
European Patent Office
Office européen des brevets

(11) **EP 2 854 436 B1**

(12) **EUROPEAN PATENT SPECIFICATION**

(45) Date of publication and mention
of the grant of the patent:
**27.06.2018 Bulletin 2018/26**

(51) Int Cl.:
*H04W 16/14* (2009.01)     *H04W 28/16* (2009.01)

(21) Application number: **13306335.4**

(22) Date of filing: **27.09.2013**

(54) **MULTI OPERATOR RESOURCE MANAGEMENT METHOD AND DEVICE**

VERFAHREN UND VORRICHTUNG ZUR RESSOURCENVERWALTUNG MIT MEHREREN
OPERATOREN

PROCÉDÉ ET DISPOSITIF DE GESTION DE RESSOURCES D'OPÉRATEUR MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.04.2015 Bulletin 2015/14**

(73) Proprietor: **Alcatel Lucent
91620 Nozay (FR)**

(72) Inventors:
• **Valentin, Stefan
70435 Stuttgart (DE)**
• **Malanchini, Ilaria
70435 Stuttgart (DE)**

(74) Representative: **Lück, Stephan
Alcatel-Lucent Deutschland AG
Intellectual Property Business Group
Lorenzstraße 10
70435 Stuttgart (DE)**

(56) References cited:
**EP-A1- 2 521 392     EP-A1- 2 627 140**

• **HOOLI K ET AL: "Flexible Spectrum Use between
WINNER Radio Access Networks", PROC. IST
MOBILE & WIRELESS, MYCONOS (GREECE),, 4
June 2006 (2006-06-04), pages 1-5, XP003020776,**

## Description

### Field of the invention

The present invention refers to a method and device for multi operator resource management. Moreover, the invention refers to a computer program product for executing such a method for multi operator resource management.

### Background

Access network virtualization for sharing resources of a radio access network among multiple operators is known. Typically, the resources are partitioned into multiple shares and each share is assigned to one operator. Moreover, there are dynamic approaches that allow an operator not to use all assigned resources. These dynamic approaches allow for passing resources of a first operator to at least one second operator in case that the first operator does not use all its resources.

When operating such an access network that supports sharing resources among multiple operators, the data traffic transferred from and to terminals associated with a certain operator is determined for accounting purposes.

However, the in case an operator makes full use of its agreed resource share, no known approach for dynamic resource sharing allows to pass the (used) resources of this operator to other operators. This reduces the degree of freedom of the resource allocation, hinders the full exploitation of the wireless channel, and, thus, significantly reduces spectral efficiency.

The scientific publication K. Hooli et al., "Flexible Spectrum Use Between WINNER Radio Access Networks", 1ST Mobile & Wireless Communications Summit, 2006 discloses an inter-system spectrum assignment functionality, which assigns spectral resources represented in terms of time-frequency chunks to multiple radio access networks.

In EP 2 627 140 A1, a method for scheduling of radio resources to user terminals of different network operators is disclosed.

In EP 2 521 392 A1, a method to evaluate fairness of resource allocations in shared bands is disclosed.

### Summary

The object of the present invention is to provide a multi operator resource management method that allows for using the resources of network more efficiently.

This object is solved by a method according to claim 1, a network element according to claim 12 and a computer program product according to claim 14.

According to an embodiment of the present invention, a multi operator resource management method for managing resources of a radio network used by multiple network operators is provided, the method comprising subdividing the resources into multiple shares, each of said multiple shares being assigned to one of said multiple network operators; and calculating a dynamic sharing ratio for the shares, the dynamic sharing ratio describing a portion of the resources to be allocated to the network operator to which the respective share has been assigned; wherein the dynamic sharing ratio is calculated from an agreed sharing ratio.

By calculating a dynamic sharing ratio from the agreed sharing ratio, the method is able to dynamically adapt the resource allocation to the individual operators before the resources are used, whereas known methods always allocate the resources to the operators according to the agreed sharing ratios but allow the operators not to use all assigned resources if they have little demand. The dynamic sharing ratio calculated by the method may thus include values that differ from the agreed sharing ratio. By dynamically adapting the resource allocation prior to resource usage, the method may assign more resources than specified according to the agreed sharing ratios to operators whose terminals currently have rather good transmission conditions (and therefore high attainable bitrates), thereby improving the overall efficiency, e.g. the overall spectral efficiency of radio resources. Assigning more resources to one or more operators than specified according to the agreed sharing ratios is possible even in situations when all operators have a high demand for data transmission and need as many resources as possible.

In an embodiment, the dynamic sharing ratio is calculated not only from the agreed sharing ratio but also from input parameters that characterize a current state of the network. For example, the input parameter may characterize radio transmission conditions in a radio cell of the network. In an embodiment, the input parameters may include an achievable bitrate on at least one radio link between a terminal of the network and a base station of the network.

In an embodiment, the method comprises determining a deviation metric for at least one share, the deviation metric, characterizing a deviation of the dynamic sharing ratio from the agreed sharing ratio. The agreed sharing ratio may be pre-negotiated between the operators and an infrastructure provider who owns the network. The dynamic sharing ratios are calculated by the method from the agreed sharing ratios in consideration of the momentary situation of the network, e.g. momentary noise and interference levels on radio links between a base station and terminals of the network.

In an embodiment, the deviation metric is a linear deviation describing a difference between the dynamic sharing ratio and the agreed sharing ratio of one share.

In another embodiment, the deviation metric is a proportional deviation describing a quotient of the dynamic sharing ratio and the agreed sharing ratio of one share. Moreover, it is possible to calculate deviation metrics of different types, i.e. in an embodiment both the linear deviation as well as the proportional deviation may be calculated.

In an embodiment, said calculating the dynamic sharing ratio comprises limiting at least one dynamic sharing ratio such that the dynamic sharing ratio is within an agreed deviation interval. Applying the agreed deviation interval assures that all operators, including those that momentarily have bad transmission conditions, receive enough transmission resources. The agreed deviation interval may be pre-negotiated between the operators and the infrastructure provider. The agreed deviation interval may be specific to the individual operators. Operators who can tolerate rather high variations in resource allocation may choose a large agreed deviation interval and the infrastructure provider may offer resources at a lower price to operators that accept the large deviation interval.

In a preferred embodiment, the agreed deviation interval is chosen such that the dynamic sharing ratio can reach a value less than the agreed sharing ratio. That is, the linear deviation metric may reach negative values and the proportional deviation metric may reach values less than one. This has the effect that the method may assign fewer resources to an operator than agreed according to the agreed sharing ratio.

In an embodiment, the dynamic sharing ratio is calculated for at least one time slot within a sequence of subsequent time slots. In other words, the method operates in a time-discrete way. In a preferred embodiment, the time slots (or at least their duration) correspond to time intervals, e.g. Transmission Time Intervals (TTIs), used for scheduling transmission over a radio link of the network. As a consequence, the method may perform multi operator resource management (i.e. assigning resources to the operators) and intra-operator scheduling simultaneously in order to obtain a higher overall spectral efficiency than when on relying on separate operator specific schedulers.

In an embodiment, a deviation budget value is calculated from values of the deviation metric residing within a predefined accounting period. The deviation budget characterizes a cumulative deviation of the actual resource allocation according to the dynamic sharing ratios from the agreed resource allocation indicated by the agreed sharing ratio.

In an embodiment, the deviation metric and/or the deviation budget value is stored in a database associated to the respective operator. The database may be located on the respective operator's premises or may be part of the network. Preferably, the database is adapted to grant at least read access to the respective operator so that the operator can retrieve the deviation metric.

In an embodiment, the resources of the radio access network include radio transmission resources.

In an embodiment, the resources of the radio access network include data or signal processing resources of at least one network element of the radio access network.

In an embodiment, the resources of the radio access network include transmission resources of at least one backhaul link.

According to another embodiment of the present invention, a network element for a radio access network is provided, the network element being operable for subdividing the resources into multiple shares, each of said multiple shares being assigned to one of said multiple network operators; and calculating a dynamic sharing ratio for the shares, the dynamic sharing ratio describing a portion of the resources to be allocated to the network operator to which the respective share has been assigned; wherein the dynamic sharing ratio is calculated from an agreed sharing ratio.

In an embodiment, the network element is operable for determining a deviation metric for at least one share, the deviation metric characterizing a deviation of the dynamic sharing ratio from the agreed sharing ratio.

In an embodiment, the network element is operable for executing a method for multi operator resource management described herein.

According to yet another embodiment of the present invention, a computer program product, preferably a computer readable storage medium is provided, the computer program product comprising a computer program that is programmed for executing a method for multi operator resource management described herein when run on a computer. The storage medium may include semiconductor memory (e.g. RAM, ROM, Flashrom), magnetic storage (e.g. magnetic discs or tapes) or optical storage (e.g. optical discs). Moreover, the computer program product may be provided by a server for download over a communication network like the Internet.

**Brief description of the figures**

Exemplary embodiments and further advantages of the present invention are shown in the Figures and described in detail hereinafter.

Figure 1          shows communication network owned by an infrastructure provider and used by multiple network operators;

Figure 2          shows a block diagram of a method for multi operator resource management;

Figure 3          shows a detail of the method of Figure 2 in the form of a sequence chart;

Figure 4          shows a time window comprising time slots used by the method;

Figures 5 to 7     show diagrams describing the behavior of the method in a first exemplary scenario; and

Figures 8 to 10    show diagrams similar to the diagrams shown in Figures 5 to 7 for a second exemplary scenario.

## Description of the embodiments

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions.

Moreover, all statements herein reciting principles, aspects, and embodiments of the invention, as well as specific examples thereof, are intended to encompass equivalents thereof.

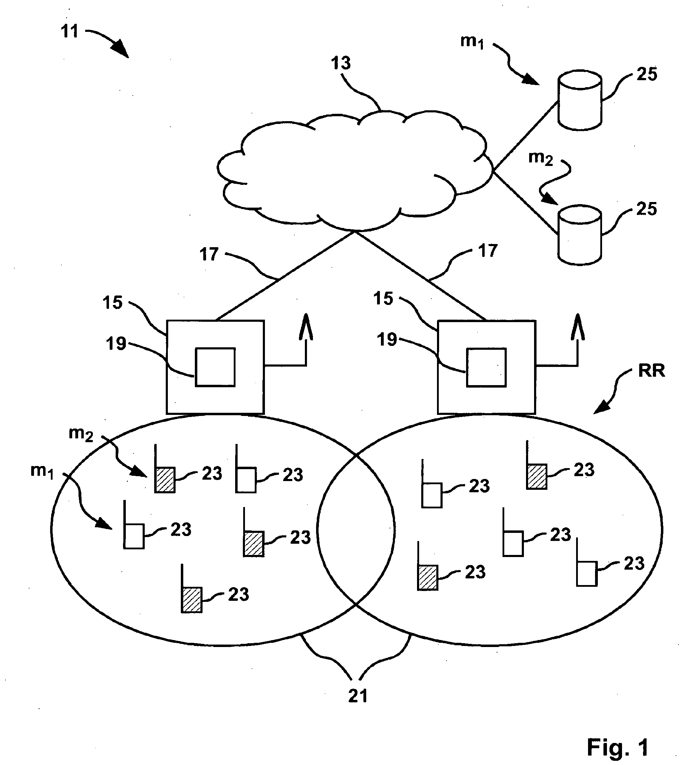

Figure 1 shows a communication network 11 according an embodiment. The network 11 comprises a core network 13 and at least one base station 15. At least one base station 15 is connected to the core network by a backhaul link 17. The backhaul link 17 may be provided by any suitable communication technology, e.g. optical communication including Passive Optical Networks or electrical communication. Moreover, in an embodiment, the backhaul link 17 may be a wireless link.

The base stations 15 may include processing resources 19 such as a general purpose processor, a signal processor, digital logic circuitry. The processing resources 19 are adapted and/or programmed for processing of signaling and/or payload data including protocol processing and baseband signal processing. In addition, the base stations 15 define at least one radio cell 21. The radio cell 21 comprises radio transmission resources RR including radio channels, codes, transmission power, etc.

The network 11 is used by multiple operators. For the sake of simplicity, only two operators $m_1$, $m_2$ are present in the scenario shown in Figure 1. However, the present invention may be applied in connection any number M of operators, where M = $\{m_1, m_2, ... m_M\}$ is a set of operators using the network 11. In other words, operating sharing is applied in the network 11, i.e. the operators $m_1$, $m_2$ share at resources of the network. 11. The shared resources may include not only the radio transmission resources RR but also the processing resources 19 or transmission resources of the backhaul links 17.

Terminals 23, also referred to as User Equipment (UE), of the network 11 located within the radio coverage region of a certain cell 21 may communicate with the base station 15 belonging to this cell 21 via the radio transmission resources RR of this cell 21. In the shown embodiment, the terminals 23 are assigned to a certain operator $m_1$, $m_2$. In Figure 1, the terminals 23 marked with a hatched area belong to operator $m_1$ and the remaining terminals 21 belong to operator $m_2$. In another embodiment, the assignment of terminals 21 to operators is not static, i.e. the terminals 23 may change the operator $m_1$, $m_2$.

Moreover, the network 11 comprises at least one accounting database 25 associated with one operator $m_1$, $m_2$. Associating an accounting database 25 with a certain operator may include configuring the accounting database 25 such that the respective operator $m_1$, $m_2$ has sufficient access permissions to read accounting data stored, e.g. by a radio resource management method in the accounting database 25. In the shown embodiment, two accounting databases 25 are provided, each of them being associated with one of the two operators mi, $m_2$. The two accounting databases 25 are separate from the access network 11, preferably co-located with premises of the respective operator $m_1$, $m_2$. In another embodiment, the accounting databases 25 are maintained in the network 11, e.g. by a node of the core network 13.

The processing resources 19 may be configured for executing the radio resource management method. To this end, a computer program may be provided that is programmed for executing the radio resource management method when run on a programmable computer of the processing resources 19. In order to perform radio resource management, i.e. to assign portions of radio transmission resources to individual terminals 23, the radio transmission resources may be subdivided according to frequency, time, code, spatial layer, etc. Although radio resource management method described herein may be applied in connection with any type of radio system, the shown embodiment includes a LTE radio access network. According to the technical specification of LTE, the radio transmission resources are subdivided by frequency and time into multiple Physical Resource Blocks (PRB). A PRB typically comprises twelve subsequent subcarriers (180 kHz) and six or seven subsequent modulation symbols (0.5 ms). The granularity of radio resource management may correspond to one PRB or multiple subsequent PRBs. In the time dimension, the granularity corresponds to two neighboring PRB, resulting in a minimum Transmission Time Interval (TTI) of 1 ms.

The resource management method may be executed my at least one base station 15. However, the resource management method may also be executed on another node of the network 11. In Figure 1, classical base stations 15 comprising a single network element located at a single place in the network 11 are shown. In another embodiment, at least one base station 15 is a distributed base station, with different functional parts of the base station being located on different network elements. For example baseband processing may be performed on another network element than radio frequency signal processing. The method for resource management may be executed on one or more network elements of the distributed base station, preferably on a network element that performs baseband signal processing and/or communication protocol processing.

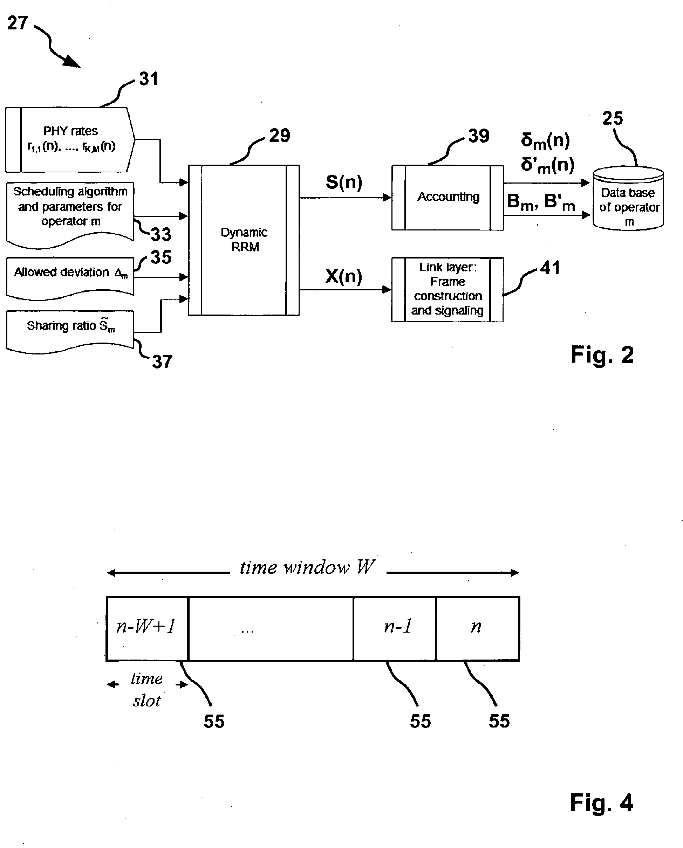

Figure 2 shows a block diagram of the radio resource management method 27. The method 27 comprises a RRM block 29 for performing dynamic radio resource management.

The method comprises a block 31 for determining bitrates $r_{k.m}$, $k = 1, ..., K$, $m = 1, ..., M$ per resource unit achievable on a radio link between a terminal 23 having an index k that is associated with operator m and the base station 15 with which this terminal 23 is registered. Block 31 may retrieve the bitrates $r_{k,m}$ from a physical layer (PHY) protocol entity of the base station 15. The physical layer protocol entity may calculate the bitrates e.g. from modulation and coding parameters the physical layer protocol entity has chosen depending on the transmission characteristics on the radio link. Because the resources considered in the embodiment described herein are time (e.g. a number of TTIs) and frequency (e.g. the number of PRBs), the rates $r_{k.m}$ may be expressed in bit/s/Hz. The rates $r_{k.m}$ correspond to the spectral efficiency of the respective radio link.

Operator specific input parameters shown in a block 33 of the method 27 include a scheduling algorithm and/or parameters of the scheduling algorithm used for scheduling of resources assigned to a specific operator m. As a consequence, the method 27 allows for using operator specific scheduling policies and scheduling parameters although, in an embodiment, the RRM block 29 may be adapted to perform scheduling for all operators 1, ..., M simultaneously.

Further input parameters for the RRM block 29 include an agreed sharing ratio $\widetilde{S_m}$ specific to a certain operator m (see block 37). The agreed sharing ratio $\widetilde{S_m}$ may describe a percentage of resources to be allocated to the respective operator m. The sharing ratio $\widetilde{S_m}$ may be agreed in a contract between the operator m and e.g. a service provider who owns the network 11.

Another input parameter is an allowed maximum deviation $\Delta_m$ of the dynamic sharing ratio $S_m(n)$ from the agreed sharing ratio $\widetilde{S_m}$ within a specified time window W. This parameter is provided by block 35 in Figure 2. The allowed deviation $\Delta_m$ may specify an agreed deviation interval $[-\Delta_m, \Delta_m]$. The RRM block 29 is adapted for calculating only dynamic sharing ratios $S_m$ that are in the agreed deviation interval.

Dynamic radio resource management includes calculating an allocation of portions of resources to individual terminals 23 of the network. The result of said calculating comprises an allocation vector $X(n) = (x_1(n), ..., x_K(n))$ describing the allocation of a considered type of resources to the terminals 1, ..., K. The RRM block 28 performs multi operator resource management, i.e. allows multiple network operators to use resources of the network 11 simultaneously. Accordingly, resource management includes determining a dynamic sharing ratio $S_i(n)$ describing a quotient of the amount of resources allocated to operator m and the total amount of available resources. The dynamic sharing ratios for the individual operators 1, ..., M may be included into a dynamic sharing ratio vector $S(n) = (s_1(n),... , s_M(n))$.

In the shown embodiment, the RRM block operates time discretely. That is, the time is subdivided into time slots 1, 2, ..., n, n+1, ... and the dynamic sharing ratios $S_m(n)$ as well as the allocation vector $X(n)$ are calculated for reach time slot. In a preferred embodiment, a duration of a time slot is equal to the temporal scheduling granularity of the considered radio system. The slots may correspond to the TTIs used in the radio system. As a consequence, allocating resource shares to the individual operators m is performed in the same time granularity as operator specific scheduling, which simplifies the implementation of the RRM block 29, which may be arranged for performing inter-operator resource allocation and operator specific scheduling simultaneously.

An accounting block 39 of the method 27 is arranged for determining at least one deviation metric $\delta_m(n)$, the deviation metric $\delta_m(n)$ describing a deviation of the dynamic sharing ratio $S_m(n)$ from the agreed sharing ratio $\widetilde{S_m}$ for a specific operator m within a time window of duration W Moreover, a deviation budget $B_m$ may be calculated for at least one operator m. The deviation budget $B_m$ describes the long-term development of the deviation during an accounting period (e.g. one day, one month, etc.). The accounting block 39 stores the deviation metric $\delta_m(n)$ and/or the deviation budget $B_m$ into the accounting database 25 of the respective operator m. Although only one accounting database 25 is shown in Figure 2, in an embodiment, every operator m may have a dedicated accounting data base 25 in which the operator specific deviation and budget metrics $\delta_m(n)$ and $B_m$ are stored such that they are readable by the respective operator m. Thus, the operators m can check the resource sharing among the operators and see whether the method 27 has allocated more resources, fewer resources than agreed or whether the allocated share corresponds to the agreed sharing ratio.

As can be seen in Figure 2, the allocation vector X(n) is forwarded to radio transmission functions 41, e.g. a link layer and/or physical layer protocol entity of the base station 15, so that frames can be constructed according to the resource allocation specified in the allocation vector X(n). The radio transmission functions 41 may include forwarding control information, e.g. scheduling grants, to the terminals 25 in order to instruct the terminals 25 to use uplink resources as specified by the allocation vector X(n).

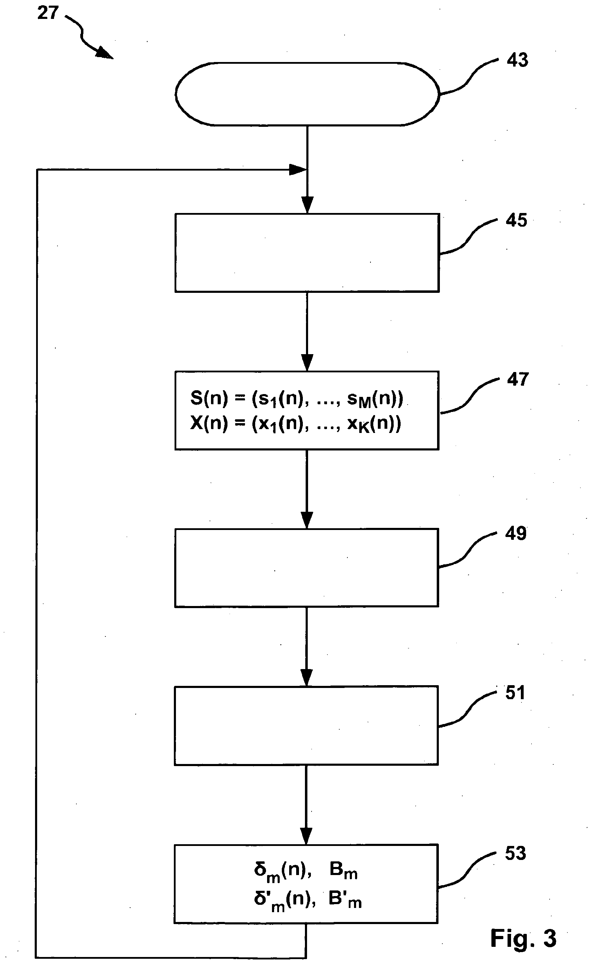

Figure 3 shows operations that may be performed by the method 27. After a start 43 of the method 27, a step 45 subdivides resources, e.g. time and frequency, into multiple shares to be assigned the network operator using the network 11. The method 27 performs dynamic operator sharing (as opposed to static operator sharing), where a sharing ratio assigned to a certain operator is time-variant. Accordingly, the method 27 comprises a step 47 for calculating the dynamic sharing ratio vector S(n) and the allocation vector X(n) for the individual time slots.

A step 49 of the method 29 assigned the resources to the individual operators m according to the dynamic sharing vector S(n). A sharing ratio $S_m(n)$ determined in step 47 may be less than, equal to or greater than the agreed sharing ratio. In particular, the method 27 may assign fewer resources than agreed to a certain operator in order to improve the overall efficiency of the network 11. A step 51 calculates a linear deviation metric $\delta_m(n)$, a linear deviation budget $B_m$., a proportional deviation metric $\delta'_m(n)$ and/or a proportional deviation budget $B'_m$. Finally, a step 53 stores the deviation metric $\delta_m(n)$, $\delta'_m(n)$ and/or the deviation budget $B_m$, $B'_m$ into the database 25 associated with the individual operators.

As can be seen in Figure 3, the steps 45 to 53 may be executed iteratively, i.e. after the completion of step 53, the method may return to step 45. Preferably, one iteration is performed for each time slot in order to calculate the dynamic sharing ratio S(n), the resource allocation X(n), the deviation metrics $\delta_m(n)$ for each time slot and to update the deviation budget $B_m$ after each time slot.

Although the method 27 may be applied to manage any type of resources in the network 11, the shown exemplary embodiment manages the radio transmission resources RR of the cells 21 and aims at maximizing the spectral efficiency $r_{k,m}$ (max-rate scheduling policy). In other embodiment other scheduling policies may also be applied.

The operations of block 29 and step 47 can be modeled using the following linear program.

$$
\begin{aligned}
\max. \quad & \sum_{k \in \mathcal{K}} r_k[n] x_k[n] \\
\text{s.t.} \quad & \sum_{k \in \mathcal{K}} x_k[n] = 1 \\
& \sum_{k \in \mathcal{K}_m} x_k[n] = s_m[n] && \forall m \in \mathcal{M} \\
& \frac{1}{W} \sum_{i=n-W+1}^{n} s_m[i] - \tilde{S}_m = \epsilon_m[n] && \forall m \in \mathcal{M} \\
& -\Delta_m^- \leq \epsilon_m[n] \leq \Delta_m^+ && \forall m \in \mathcal{M} \\
& x_k \geq 0 && \forall k \in \mathcal{K}
\end{aligned}
\tag{1}
$$

Per arbitrary time slot n, this formulation maximizes the data rate for the complete set of users (i.e., for all operators). It allows, however, allocated data rates to be $\Delta^-_m$ smaller or $\Delta^+_m$ larger than the agreed sharing ratio $\tilde{S}_m$. Such deviation is only allowed within a time window of $W$ slots.

The time window W as well as the slots 55 are shown in Figure 4. The size of the time window in number W of slots 55 may be selected depending on the operator's general requirements as regards latency or other quality of service related parameters. For instance, if an operator m offers applications to his customers that can tolerate a high resource allocation latency (e.g. for non-real-time, non-conversational applications), this operator m may pre-negotiate with the infrastructure provider a comparatively large time window W allowing the method 27 to postpone resource allocations and thereby increasing the efficiency $r_{k,m}$. Another operator offering time-critical services (e.g. conversational or interactive services) may prefer relatively small values of W in order to obtain response services. However, the small value of W (i.e., a small time window) leads to a low degree of freedom for the RRM method 27, which - in general - results in a lower spectral efficiency level $r_{k,m}$. In an embodiment, the size W of the window is chosen such that the window covers an interval of 100ms to 1 minute, preferably 0.5 s to 5 s, preferably 0.8 s to 1.2 s.

Put formally, the proposed rate optimization is subject to the following constraints. Any resource allocation X= $(x_1, ..., x_k)$ must be chosen such that all resources in the system are used (Line 2 in the above formulation) and that no negative resources are allocated (Line 6). Dynamic multi-operator sharing is realized by Lines 3 to 5 of the above formulation. In Line 3, the dynamic sharing ratio of resources allocated per operator m is aggregated to S(n) = $s_1(n),...,s_M(n)$. This vector S(n) is then used in Line 4 to compute the deviation from the agreed sharing ratio $\tilde{S}_m$. The

deviation is a moving average over the time window of $W$ slots. The deviation is represented by a helper variable $\epsilon_m(n)$. Finally, Line 5 forces the average deviation to be within the agreed interval $[\Delta^-m, \Delta^+_m]$. This last constraint controls the level of allowed deviation individually for each operator. In the shown embodiment, a single parameter $\Delta_m = \Delta^-_m = \Delta^+_m$ is used to define the agreed interval (see Figure 2). Thus, maximum agreed positive value of the deviation is equal to the maximum agreed minimum value. In another embodiment, the two bounds $\Delta^-_m, \Delta^+_m$ of the agreed interval may be defined independently from each other.

In an embodiment, the method 27, in particular step 47, comprises applying state-of-the art optimization engines for solving the linear program. The method may be implemented on general purpose processors. In another embodiment, the method, in particular step 47, applies heuristic algorithms that provide even faster yet suboptimal solutions to the above problem.

The present invention is not limited to the max-rate scheduling policy described by the objective function (Line 1) of the above linear program. Any other scheduling policy may be applied. In particular, the above assumption that all operators apply the max-rate scheduling policy comes at no loss in generality. Multiplying the objective function in the above optimization problem by a user and operator specific weight $w_{k,m}$ readily integrates other scheduling strategies. For instance, alpha-proportional fair scheduling when $w_{k,m} = r_{k,m}/R^{\alpha}_{k,m}$ with fairness parameter $\alpha = [0,\infty]$ and average data rate R.

The RRM block 29 does not guarantee that the operators obtain the agreed sharing ratio $\tilde{S}_m$. That is why the method 27 comprises maintaining a deviation metric for accounting the usage of resources and the deviation from the agreed sharing ratios. Using such deviation metrics allows for detecting deviations and for compensating the affected operators accordingly. An accurate, objective and transparent metric is required that provides a budget of the allocated resources over a given accounting interval (e.g., one month).

It is a reasonable assumption that network operators will require the infrastructure provider to specify the used deviation metric in a sharing agreement. This contract between operators and infrastructure provider may include a table with thresholds of the deviation budget that may lead to certain compensation or further actions. On the one hand, if the deviation during an accounting period (e.g. one month) for operator $m$ is much lower than the agreed sharing ratio, the infrastructure provider will compensate m (e.g. financially or with additional channel resources). On the other hand, if the deviation budget shows that m has received significantly more than the agreed fraction of resources, m will compensate the infrastructure provider for this advantage. The infrastructure provider, thus, acts as an arbiter among the operators that transparently accounts for the deviation budget. This budget serves as a virtual price, which may eventually lead to a financial compensation or to an adjustment of the allocated resource, the sharing rate or other changes of the contract.

A first exemplary deviation metric is linear deviation $\delta_m(n)$ describing a difference between the dynamic sharing ratio $S_m(n)$ and the agreed sharing ratio $\tilde{S}_m$ related to a certain operator m. The linear deviation $\delta_m(n)$ is defined as

$$\delta_m(n) = S_m(n) - \tilde{S}_m \tag{2}$$

In case an operator gets more resources than agreed, the deviation is positive, otherwise the deviation is negative, and is zero when the operator gets exactly as agreed

A second exemplary deviation metric is proportional deviation $\delta'_m(n)$ describing a quotient of the dynamic sharing ratio $S_m(n)$ and the agreed sharing ratio $\tilde{S}_m$ related to a specific operator m. The proportional deviation $\delta'_m(n)$ is defined as

$$\delta'_m(n) = \frac{S_m(n)}{\tilde{S}_m} \tag{3}$$

In this case, the deviation is unitary when operators get exactly the agreed ratio, it is within the interval $[0,1]$ when the resources are less than agreed, and greater than one otherwise.

Based on the above-described deviation metrics $\delta_m(n)$, $\delta'_m(n)$, budget functions may be defined and calculated in the accounting block 39. The budget functions account for each of those deviation metrics over the accounting period.

This leads to a linear budget function based on the linear deviation metric $\delta_m(n)$

$$B_m = \sum_{n=1}^{N} \delta_m(n) \qquad\qquad (4)$$

and to a proportional budget function based on the proportional deviation metric $\delta'_m(n)$

$$B'_m = \frac{1}{N} \sum_{n=1}^{N} \delta_m(n), \qquad\qquad (5)$$

where $N$ is the total number of time slots over which the deviation is measured. It should be noted that the number N of slots is in general much larger than the size W of the time window used for calculating the moving average $\epsilon_m(n)$ when solving the above linear program (either directly or by applying a heuristic algorithm). The size of the time window may be in order of seconds or minutes, while the accounting period may be in the order of days, months or quarters.

The inventors have evaluated the performance of the method 27. To this end, the method has been applied to a simulated radio system. In the simulations, the widely-used i.i.d. Rayleigh block fading model has been used that leads to PHY bitrates that individually vary between users and time slots. The applied traffic model is full buffer where the users always request the achievable data rate. This traffic model represents a pessimistic assumption for the proposed system since it benefits static sharing. With this strategy, even users without traffic demand would receive resources to achieve the agreed sharing ratio without deviation ($\Delta = 0$). The dynamic resource management method 51 described herein, however, allows such deviation ($\Delta = 1$) and is not forced to serve users without (or with very low requests). This improves spectral efficiency even beyond the gains already shown with this simple traffic model.

Two cases have been considered: $\Delta = 0$ and $\Delta = 1$. For simplicity, a symmetric deviation interval $\Delta := \Delta^-_m = \Delta^+_m$ has been chosen. Both values of $\Delta$ refer to extreme cases. With $\Delta = 0$ the method 27 is forced to meet exactly the agreed ratio at every time slot 55. Thus, no deviation occurs. This case reflects state-of-the-art approaches such as static sharing or fixed splitting and, thus, serves as a practical baseline. With $\Delta = 1$ allows maximum deviation, thus, substantially increasing spectral efficiency. This case, however, leads to deviation which must be accounted for.

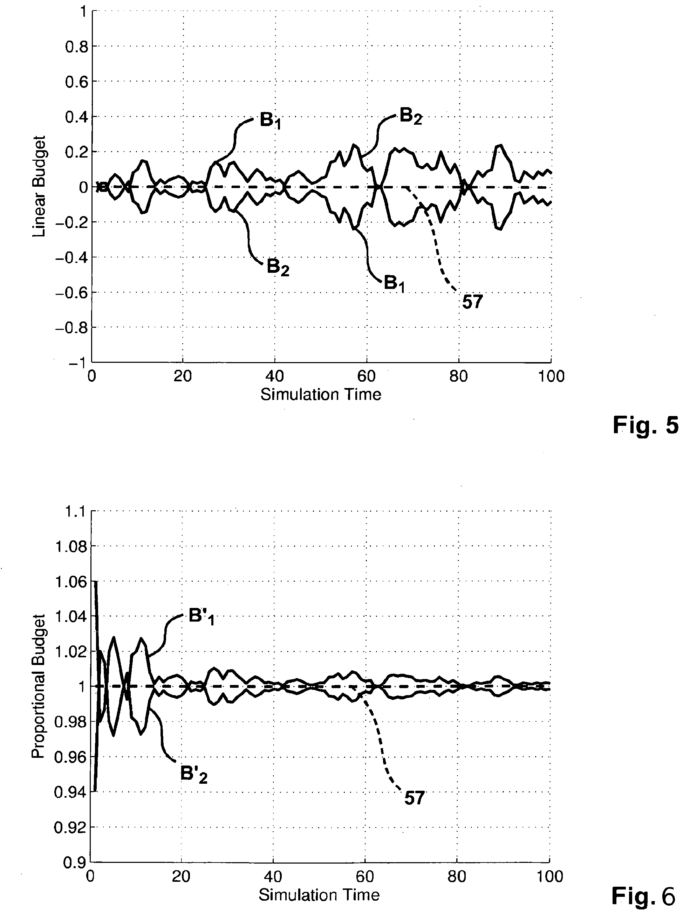

Figures 5 to 7 refer to a first exemplary scenario where $M=2$ operators share a single base station 15 with equal agreed sharing ratios $\tilde{S}_1 = \tilde{S}_2 = 0.5$. All radio links between the terminals 23 and the base station 15 have the same transmission characteristics, i.e., an average Signal to Interference plus Noise Ratio (SINR) is the same all radio links.

The curves labeled with $B_1$ and $B_2$ show the linear budget functions for the two operators. The curves labeled with $B'_1$ and $B'_2$ show the proportional budget function for these two operators. The values of both budget functions are very close to a fairness threshold 57 (which is zero and one, respectively), which shows that the method 27 substantially keeps the agreed sharing ratios $\tilde{S}_1 = \tilde{S}_2 = 0.5$. The system achieves this since the users of both operators have the same average SINR. Figure 5 shows Cumulative Distribution Functions (CDF) of the resulting overall spectral efficiency R, which corresponds to the value of the objective function of the linear program (1). The left curve 59 (plotted as a dashed line) represents the CDF of the overall spectral efficiency for the case $\Delta = 0$ (no allowed deviation). The right curve 61 shows the CDF of the overall spectral efficiency R for the case $\Delta = 1$ (maximum allowed deviation). Therein, the large gap between the CDFs 59, 61 shows the benefit of dynamic sharing. Choosing $\Delta = 1$ allows the RRM system to deviate from the agreed sharing ratios and, thus, to maximize spectral efficiency R. On the other hand, strictly keeping the sharing ratio with $\Delta = 0$ costs spectral efficiency since users with low instantaneous SINR receive more resources on the average.

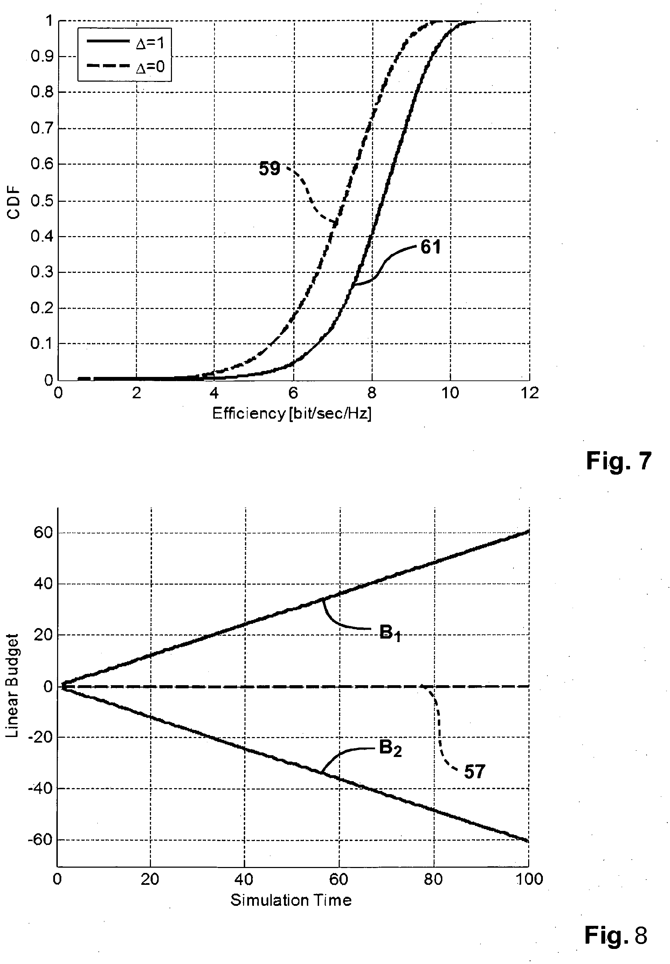

Figures 8 to 10 refer to a second exemplary scenario where the agreed sharing ratios $\tilde{S}_1$, $\tilde{S}_2$ are chosen such that the resources are not assigned equally to the operators, and at the same time the average SINR radio link for the two operators differs. In particular, terminals 23 that belong to the "poor" operator 1 ($\tilde{S}_1 = 0.2$), have a better SINR compared to the users of the "rich" operator 2 ($\tilde{S}_2 = 0.8$). This inequality regarding the SINR may occur if the terminals 23 of operator 1 are in general located closer to the base station 15 than the terminals 23 of operator 2. In this scenario, the method 27 has an "incentive" to exploit the additional degree of freedom offered by the agreed deviation interval $\Delta$ for assigning more resources to the terminals 23 of operator 1 having the better SINR values thereby increasing the overall spectral efficiency R.

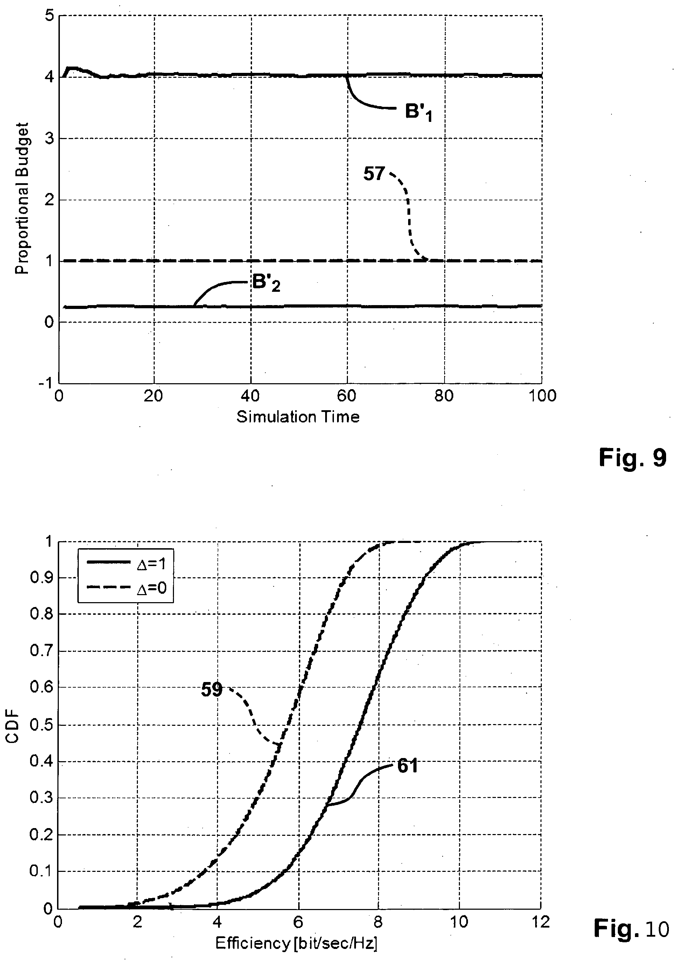

As can be seen in Figures 8 and 9, operator 1 is over-using the resources, i.e. uses more resources than agreed according to the agreed sharing ratio $\tilde{S}_1$. More specifically, operator 1 is using four times more than the agreed ratio, i.e., 80% of the resources, and operator 2 is using 25% of the agreed ratio, i.e., 20% of the total availability. This large difference from the agreed sharing ratios is expected when allowing the maximum deviation with $\Delta = 1$. Figure 10 shows the CDFs of the overall efficiency R for $\Delta = 1$ and $\Delta = 0$, respectively. Comparing Figure 10 with Figure 7 showing the same CDFs for the first scenario shows that a distance between the two CDFs is larger in Figure 10 than in Figure 7. That is, using an agreed deviation $\Delta > 0$ increases the overall spectral efficiency to a larger extent in the second scenario than in the first scenario.

To sum up, the method 27 and device 15 described herein allow for calculating the dynamic resource sharing ratio $S_m(n)$ that may differ from the agreed sharing ratio $\widetilde{S_m}$ specific to a certain operator m. This gives a higher degree of freedom for resource management and therefore improves the overall efficiency of resource usage. In order to be able to consider the individual operator's needs and requirements, two measures may be taken. First, the deviation interval $[\Delta^-_m, \Delta^+_m]$ may be applied for limiting the mean deviation calculated over the averaging time window W. Second, at least one deviation metric $\delta_m(n)$, $\delta'_m(n)$ and/or the related deviation budget function $B_m(n)$, $B'_m(n)$ may be calculated for accounting for the deviation.

## Claims

1. Multi operator resource management method (27) for managing resources (R) of a radio network (11) used by multiple network operators ($m_1$, $m_2$), the method (27) comprising

   - subdividing (45) the resources (R) into multiple shares, each of said multiple shares being assigned to one of said multiple network operators ($m_1$, $m_2$); and
   - calculating (47) a dynamic sharing ratio (S(n)) for the shares, the dynamic sharing ratio (S(n)) describing a portion of the resources (R) to be allocated to the network operator ($m_1$, $m_2$) to which the respective share has been assigned;

   wherein the dynamic sharing ratio (S(n)) is calculated from an agreed sharing ratio ($\tilde{S}(n)$), **characterized in that** the method (27) comprises determining (51) a deviation metric ($\delta_m(n)$, $\delta'_m(n)$) for at least one share, the deviation metric ($\delta_m(n)$, $\delta'_m(n)$) characterizing a deviation of the dynamic sharing ratio (S(n)) from the agreed sharing ratio ($\tilde{S}(n)$).

2. Method (27) according to claim 1, wherein the deviation metric is a linear deviation ($\delta_m(n)$) describing a difference between the dynamic sharing ratio (S(n)) and the agreed sharing ratio ($\tilde{S}(n)$) of one share.

3. Method (27) according to claim 2, wherein the deviation metric is a proportional deviation ($\delta'_m(n)$) describing a quotient of the dynamic sharing ratio ($S_m(n)$) and the agreed sharing ratio $\tilde{S}_m(n)$ of one share.

4. Method (27) according to one of the precedent claims, wherein the calculating (47) the dynamic sharing ratio (S(n)) comprises limiting at least one dynamic sharing ratio (S(n)) such that the dynamic sharing ratio (S(n)) is within an agreed deviation interval ($\Delta_m$).

5. Method (27) according to claim 4, wherein the agreed deviation interval ($\Delta_m$) is chosen such that the dynamic sharing ratio (S(n)) can reach a value less than the agreed sharing ratio ($\tilde{S}(n)$).

6. Method (27) according to one of the precedent claims, wherein the dynamic sharing ratio (S(n)) is calculated for at least one time slot (55) within a sequence of subsequent time slots (55).

7. Method according to one of the precedent claims, wherein a deviation budget value ($B_m$, $B'_m$) is calculated from values of the deviation metric ($\delta_m(n)$, $\delta'_m(n)$) residing within a predefined accounting period.

8. Method (27) according to one of the precedent claims, wherein the deviation metric ($\delta_m(n)$, $\delta'_m(n)$) and/or the deviation budget value (Bm, B'm) is stored in a database (25) associated to the respective operator ($m_1$, $m_2$).

9. Method (27) according to one of the precedent claims, wherein the resources of the radio access network (11) include radio transmission resources (TR).

10. Method (27) according to one of the precedent claims, wherein the resources of the radio access network (11) include data or signal processing resources (19) of at least one network element (15) of the radio access network (11).

11. Method (27) according to one of the precedent claims, wherein the resources of the radio access network (11) include transmission resources of at least one backhaul link (17).

12. Network element (15) for a radio access network, the network element (15) being operable for

- subdividing (45) the resources (R) into multiple shares, each of said multiple shares being assigned to one of said multiple network operators ($m_1$, $m_2$); and
- calculating (47) a dynamic sharing ratio (S(n)) for the shares, the dynamic sharing ratio (S(n)) describing a portion of the resources (R) to be allocated to the network operator ($m_1$, $m_2$) to which the respective share has been assigned;

wherein the dynamic sharing ratio (S(n)) is calculated from an agreed sharing ratio ($\tilde{S}(n)$), **characterized in that** the network element (15) is operable for determining (51) a deviation metric ($\delta_m(n)$, $\delta'_m(n)$) for at least one share, the deviation metric ($\delta_m(n)$, $\delta'_m(n)$) characterizing a deviation of the dynamic sharing ratio (S(n)) from the agreed sharing ratio ($\tilde{S}(n)$).

13. Network element (15) according to claim 12, wherein the network element (15) comprises processing resources (19) configured for executing a method (27) according to one of claims 1 to 11.

14. Computer program product, preferably a computer readable storage medium, comprising a computer program that is programmed for executing a method (27) according to one of claims 1 to 11 when run on a computer (19).

**Patentansprüche**

1. Mehrfachbetreiber-Ressourcenverwaltungs-Verfahren (27) zum Verwalten von Ressourcen (R) eines Funknetzwerks (11), das von mehreren Netzwerkbetreibern ($m_1$, $m_2$) verwendet wird, wobei das Verfahren (27) umfasst

- Unterteilen (45) der Ressourcen (R) in mehrere Anteile, wobei jeder der mehreren Anteile einem besagter mehreren Netzwerkbetreibern ($m_1$, $m_2$) zugewiesen ist; und
- Berechnen (47) eines dynamischen Teilungsverhältnisses (S(n)) für die Anteile, wobei das dynamische Teilungsverhältnis (S(n)) einen Anteil der Ressourcen (R) beschreibt, der dem Netzwerkbetreiber ($m_1$, $m_2$) zugeteilt werden muss, dem der entsprechende Anteil zugewiesen worden ist;

wobei das dynamische Teilungsverhältnis (S(n)) berechnet wird aus einem vereinbarten Teilungsverhältnis ($\tilde{S}(n)$), **dadurch gekennzeichnet, dass** das Verfahren (27) umfasst das Bestimmen (51) einer Abweichungsmetrik ($\delta_m(n)$, $\delta^3_m(n)$), für mindestens einen Anteil, wobei die Abweichungsmetrik ($\delta_m(n)$, $\delta^3_m(n)$), eine Abweichung des dynamischen Teilungsverhältnisses (S(n)) vom vereinbarten Teilungsverhältnis ($\tilde{S}(n)$) kennzeichnet.

2. Verfahren (27) nach Anspruch 1, wobei die Abweichungsmetrik eine lineare Abweichung ($\delta_m(n)$) ist, welche eine Differenz beschreibt zwischen dem dynamischen Teilungsverhältnis ($S_m(n)$) und dem vereinbarten Teilungsverhältnis ($\tilde{S}(n)$) eines Anteils.

3. Verfahren (27) nach Anspruch 2, wobei die Abweichungsmetrik eine proportionale Abweichung ($\delta^3_m(n)$) ist, welche einen Quotienten des dynamischen Teilungsverhältnisses ($S_m(n)$) und dem vereinbarten Teilungsverhältnis $\tilde{S}_m(n)$ eines Anteils beschreibt.

4. Verfahren (27) nach einem der vorhergehenden Ansprüche, wobei das Berechnen (47) des dynamischen Teilungsverhältnisses (S(n)) umfasst das Beschränken mindestens eines dynamischen Teilungsverhältnisses (S(n)), sodass das dynamische Teilungsverhältnis (S(n)) innerhalb eines vereinbarten Abweichungsintervalls ($\Delta_m$) liegt.

5. Verfahren (27) nach Anspruch 4, wobei das vereinbarte Abweichungsintervall ($\Delta_m$) so ausgewählt wird, dass das dynamische Teilungsverhältnis (S(n)) einen Wert erreichen kann, der geringer ist als das vereinbarte Teilungsverhältnis ($\tilde{S}(n)$).

6. Verfahren (27) nach einem der vorhergehenden Ansprüche, wobei das dynamische Teilungsverhältnis (S(n)) berechnet wird für mindestens ein Zeitfenster (55) innerhalb einer Sequenz von nachfolgenden Zeitfenstern (55).

7. Verfahren nach einem der vorhergehenden Ansprüche, wobei ein Abweichungsbudgetwert ($B_m$, $B'_m$) berechnet

wird aus den Werten der Abweichungsmetrik ($\delta_m(n)$, $\delta^{3}{}_m(n)$), die innerhalb eines vordefinierten Berechnungszeitraums liegen.

8. Verfahren (27) nach einem der vorhergehenden Ansprüche, wobei die Abweichungsmetrik ($\delta_m(n)$, $\delta^{3}{}_m(n)$) und/oder der Abweichungsbudgetwert ($B_m$, $B'_m$) gespeichert sind in einer Datenbank (25), die mit dem entsprechenden Betreiber ($m_1$, $m_2$) verbunden ist.

9. Verfahren (27) nach einem der vorhergehenden Ansprüche, wobei die Ressourcen des Funkzugangsnetzwerks (11) Funkübertragungsressourcen (TR) einschließen.

10. Verfahren (27) nach einem der vorhergehenden Ansprüche, wobei die Ressourcen des Funkzugangsnetzwerks (11) Daten- oder Signalverarbeitungsressourcen (19) einschließen von mindestens einem Netzwerkelement (15) des Funkzugangsnetzwerks (11).

11. Verfahren (27) nach einem der vorhergehenden Ansprüche, wobei die Ressourcen des Funkzugangsnetzwerks (11) Übertragungsressourcen einschließen von mindestens einem Backhaul-Link (17).

12. Netzwerkelement (15) für ein Funkzugangsnetzwerk, wobei das Netzwerkelement (15) betreibbar ist zum

   - Unterteilen (45) der Ressourcen (R) in mehrere Anteile, wobei jeder der mehreren Anteile einem besagter mehreren Netzwerkbetreibern ($m_1$, $m_2$) zugewiesen ist; und
   - Berechnen (47) eines dynamischen Teilungsverhältnisses (S(n)) für die Anteile, wobei das dynamische Teilungsverhältnis (S8n)) einen Anteil der Ressourcen (R) beschreibt, der dem Netzwerkbetreiber ($m_1$, $m_2$) zugeteilt werden muss, dem der entsprechende Anteil zugewiesen worden ist;

   wobei das dynamische Teilungsverhältnis (S(n)) berechnet wird aus einem vereinbarten Teilungsverhältnis ($\tilde{S}(n)$), **dadurch gekennzeichnet, dass** das Netzwerkelement (15) betreibbar ist zum Bestimmen (51) einer Abweichungsmetrik ($\delta_m(n)$, $\delta^{3}{}_m(n)$) für mindestens einen Anteil, wobei die Abweichungsmetrik ($\delta_m(n)$, $\delta^{3}{}_m(n)$) eine Abweichung des dynamischen Teilungsverhältnisses (S(n)) vom vereinbarten Teilungsverhältnis ($\tilde{S}(n)$) kennzeichnet.

13. Netzwerkelement (15) nach Anspruch 12, wobei das Netzwerkelement (15) umfasst das Verarbeiten von Ressourcen (19), konfiguriert zum Ausführen des Verfahrens (27) nach einem der Ansprüche 1 bis 11.

14. Computerprogramm-Produkt, bevorzugt ein computerlesbares Speichermedium, umfassend ein Computerprogramm, das programmiert ist zum Ausführen eines Verfahrens (27) nach einem der Ansprüche 1 bis 11, wenn es auf einem Computer (19) ausgeführt wird.

## Revendications

1. Procédé de gestion de ressources d'opérateurs multiples (27) pour gérer des ressources (R) d'un réseau radio (11) utilisé par des opérateurs de réseau multiples ($m_1$, $m_2$), le procédé (27) comprenant les étapes suivantes

   - subdiviser (45) les ressources (R) en parts multiples, chacune desdites parts multiples étant attribuée à un desdits opérateurs de réseau multiples ($m_1$, $m_2$); et
   - calculer (47) un rapport de partage dynamique (S(n)) pour les parts, le rapport de partage dynamique (S(n)) décrivant une partie des ressources (R) devant être attribuées à l'opérateur de réseau ($m_1$, $m_2$) auquel la part respective a été attribuée ;

   dans lequel le rapport de partage dynamique (S(n)) est calculé à partir d'un rapport de partage convenu($\tilde{S}(n)$), **caractérisé en ce que** le procédé (27) comprend la détermination (51) d'une mesure d'écart ($\delta_m(n)$, $\delta'_m(n)$) pour au moins une part, la mesure d'écart ($\delta_m(n)$, $\delta'_m(n)$) caractérisant un écart entre le rapport de partage dynamique (S(n)) et le rapport de partage convenu($\tilde{S}(n)$).

2. Procédé (27) selon la revendication 1, dans lequel la mesure d'écart est un écart linéaire ($\delta_m(n)$) décrivant une différence entre le rapport de partage dynamique (S(n)) et le rapport de partage convenu ($\tilde{S}(n)$) d'une part.

3. Procédé (27) selon la revendication 2, dans lequel la mesure d'écart est un écart proportionnel ($\delta'_m(n)$) décrivant

un quotient du rapport de partage dynamique ($S_m(n)$) et du rapport de partage convenu $\tilde{S}_m(n)$ d'une part.

4. Procédé (27) selon l'une des revendications précédentes, dans lequel le calcul (47) du rapport de partage dynamique (S(n)) comprend la limitation d'au moins un rapport de partage dynamique (S(n)) de sorte que le rapport de partage dynamique (S(n)) soit inclus dans un intervalle d'écart convenu ($\Delta_m$).

5. Procédé (27) selon la revendication 4, dans lequel l'intervalle d'écart convenu ($\Delta_m$) est choisi de sorte que le rapport de partage dynamique (S(n)) puisse atteindre une valeur inférieure au rapport de partage convenu($\tilde{S}(n)$).

6. Procédé (27) selon l'une des revendications précédentes, dans lequel le rapport de partage dynamique (S(n)) est calculé pour au moins un intervalle de temps (55) dans une séquence d'intervalles de temps (55) suivants.

7. Procédé selon l'une des revendications précédentes, dans lequel une valeur de budget d'écart ($B_m$, $B'_m$) est calculée à partir de valeurs de la mesure d'écart ($\delta_m(n)$, $\delta'_m(n)$) résidant dans une période de comptabilité prédéfinie.

8. Procédé (27) selon l'une des revendications précédentes, dans lequel la mesure d'écart ($\delta_m(n)$, $\delta'_m(n)$) et/ou la valeur de budget d'écart (Bm, B'm) est/sont enregistrée(s) dans une base de données (25) associée à l'opérateur respectif ($m_1$, $m_2$).

9. Procédé (27) selon l'une des revendications précédentes, dans lequel les ressources du réseau d'accès radio (11) comprennent des ressources de transmission radio (TR).

10. Procédé (27) selon l'une des revendications précédentes, dans lequel les ressources du réseau d'accès radio (11) comprennent des ressources de traitement de données ou de signaux (19) d'au moins un élément de réseau (15) du réseau d'accès radio (11).

11. Procédé (27) selon l'une des revendications précédentes, dans lequel les ressources du réseau d'accès radio (11) comprennent des ressources de transmission d'au moins une liaison terrestre (17).

12. Élément de réseau (15) pour un réseau d'accès radio, l'élément de réseau (15) permettant

  - de subdiviser (45) les ressources (R) en parts multiples, chacune desdites parts multiples étant attribuée à un desdits opérateurs de réseau multiples ($m_1$, $m_2$) ; et
  - de calculer (47) un rapport de partage dynamique (S(n)) pour les parts, le rapport de partage dynamique (S(n)) décrivant une partie des ressources (R) devant être attribuées à l'opérateur de réseau ($m_1$, $m_2$) auquel la part respective a été attribuée ; dans lequel le rapport de partage dynamique (S(n)) est calculé à partir d'un rapport de partage convenu($\tilde{S}(n)$), **caractérisé en ce que** l'élément de réseau (15) permet de déterminer (51) une mesure d'écart ($\delta_m(n)$, $\delta'_m(n)$) pour au moins une part, la mesure d'écart ($\delta_m(n)$, $\delta'_m(n)$) caractérisant un écart entre le rapport de partage dynamique (S(n)) et le rapport de partage convenu($\tilde{S}(n)$).

13. Élément de réseau (15) selon la revendication 12, dans lequel l'élément de réseau (15) comprend des ressources de traitement (19) configurées pour exécuter un procédé (27) selon l'une des revendications 1 à 11.

14. Produit de programme informatique, de préférence un support de stockage lisible par un ordinateur, comprenant un programme informatique qui est programmé pour exécuter un procédé (27) selon l'une des revendications 1 à 11 lorsqu'il est exécuté sur un ordinateur (19).

Fig. 1

27

31

PHY rates
$r_{1,1}(n), ..., r_{K,M}(n)$

29

39

$\delta_m(n)$
$\delta'_m(n)$

25

Scheduling algorithm
and parameters for
operator m

33

Dynamic
RRM

S(n)

Accounting

$B_m, B'_m$

Data base
of operator
m

35

Allowed deviation $\Delta_m$

X(n)

Link layer:
Frame
construction
and signaling

41

Sharing ratio $\tilde{S}_m$

37

## Fig. 2

*time window W*

| $n$-$W$+1 | ... | $n$-1 | $n$ |
|---|---|---|---|

← *time*
*slot* →

55

55

55

## Fig. 4

**27**

**43**

**45**

**47**

$$S(n) = (s_1(n), ..., s_M(n))$$
$$X(n) = (x_1(n), ..., x_K(n))$$

**49**

**51**

**53**

$$\delta_m(n), \quad B_m$$
$$\delta'_m(n), \quad B'_m$$

**Fig. 3**

Fig. 5

Fig. 6

**Fig. 7**

**Fig. 8**

**Fig. 9**

**Fig. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2627140 A1

- EP 2521392 A1

**Non-patent literature cited in the description**

- **K. HOOLI et al.** Flexible Spectrum Use Between WINNER Radio Access Networks. *1ST Mobile & Wireless Communications Summit,* 2006